# EUROPEAN PATENT SPECIFICATION

(11) **EP 1 095 894 B1**
(45) Date of publication and mention of the grant of the patent: **25.02.2004**
(21) Application number: 99830671.6
(22) Date of filing: 26.10.1999
(51) Int. Cl.: B65H 75/44

(54) **A cable winding device**
Kabeltrommel
Enrouleur de cable

(43) Date of publication of application: 02.05.2001
(73) Proprietor: CANDY S.p.A., I-20052 Monza (Milano) (IT)
(72) Inventor: Fumagalli, Silvano, 20052 Monza, Milano (IT)
(74) Representative: Siniscalco, Fabio

(56) References cited:
- EP-A- 0 098 890
- WO-A-89/03360
- DE-A- 2 642 709
- DE-A- 2 726 292
- DE-C- 3 626 266
- FR-A- 2 180 983
- US-A- 2 530 773
- US-A- 2 825 924

## Description

The present invention relates to an automatic cable-winding device for a household appliance such as a vacuum cleaner, a carpet sweeper, a polisher or the like. More particularly, the invention relates to an automatic cable-winder comprising a fixed support, a reel for holding an electrical cable, the reel being mounted so as to be rotatable on a pin of the fixed support, means for anchoring an end of the electrical cable to the reel, a pair of sliding electrical contacts associated with the reel and cooperating with electrical contacts of the fixed support in order to establish electrical continuity, resilient means connected to the reel and to the fixed support for resiliently biasing the reel towards an initial position in which the electrical cable is fully wound on the reel, and lockable/releasable stop means for locking the reel in an operative position in which the electrical cable is unwound from the reel against the action of the resilient means. Such cable-winding devices are e.g. described in WO-A-89/03360 and DE-A-36 26 266.

As is known, household appliances of the type specified above have automatic cable-winding devices which are generally disposed inside the casing of the household appliance and from which the electrical cable required to connect the appliance to a nearby power socket can be unwound.

It should be pointed out that, in known cable-winding devices, the stop means are locked automatically as soon as the electrical cable unwound from the reel is released and, in order to bring about automatic rewinding of the electrical cable, it is necessary to act on a release button, generally of the foot-operated type, which can act on the stop means of the device.

The need to provide the household appliance with a release button leads to notable disadvantages and is undesirable. This is due to the considerable functional and structural complications which the presence of a button separate from the cable-winding device involves. This is found particularly when, in order to satisfy aesthetic and spatial constraints, it is necessary to use lever connections, generally constituted by moulded plastics components, to connect the release button to the cable-winding device housed inside the household appliance.

It should also be borne in mind that the production of the moulds required to manufacture the cable-winding device and the lever connections is very expensive and is therefore justified only for large-scale production. As a result, cable-winding devices available at the moment are not suitable for structural modification or variation to satisfy different requirements, including those connected with the appearance of the household appliance. In this connection, it should not be forgotten that, for marketing reasons, the appearance of household appliances of the type specified is subject to continual change which necessarily also leads to continual development and modification of the controls and of the various lever connections.

It is clear from the foregoing that there is a need to provide a cable-winding device which, as well as being compact and light, can be produced completely separately from the aesthetic casing of the household appliance and, at the same time, does not require the presence of complex lever connections and the like for releasing the stop means of the device. In other words, the requirement is to eliminate buttons and foot-operated devices of any kind so as to render the casing of the household appliance completely independent of the cable-winder used.

The problem upon which the present invention is based is to design a cable-winding device which has structural and functional characteristics such as to satisfy the above-mentioned requirement and at the same time to prevent the problems referred to with reference to the cable-winding devices of the prior art.

This problem is solved by a cable-winding device according to Claim 1.

The concept upon which the present invention is based is that of bringing about the locking and the release of the stop means which control the rotation of the reel relative to the fixed support by acting directly on the electrical cable simply by variations in the pull and/or the inclination imparted to the electrical cable.

Further characteristics and the advantages of the cable-winding device according to the invention will become clear from the following description of some preferred embodiments thereof, provided by way of nonlimiting example, with reference to the appended drawings, in which:
Figure 1 is a schematic perspective view of a first embodiment of a cable-winding device according to the invention, with parts separated,
Figure 2 is a simplified side view of the cable-winding device of Figure 1,
Figure 3 is an enlarged detail of the cable-winding device of Figure 1 with some parts removed,
Figures 4 and 5 show the detail of Figure 3 in two different operating conditions,
Figure 6 is a simplified side view of the cable-winding device of Figure 1 from a different viewpoint,
Figure 7 is a partially-sectioned side view of the cable-winding device of Figure 1 with some parts removed,

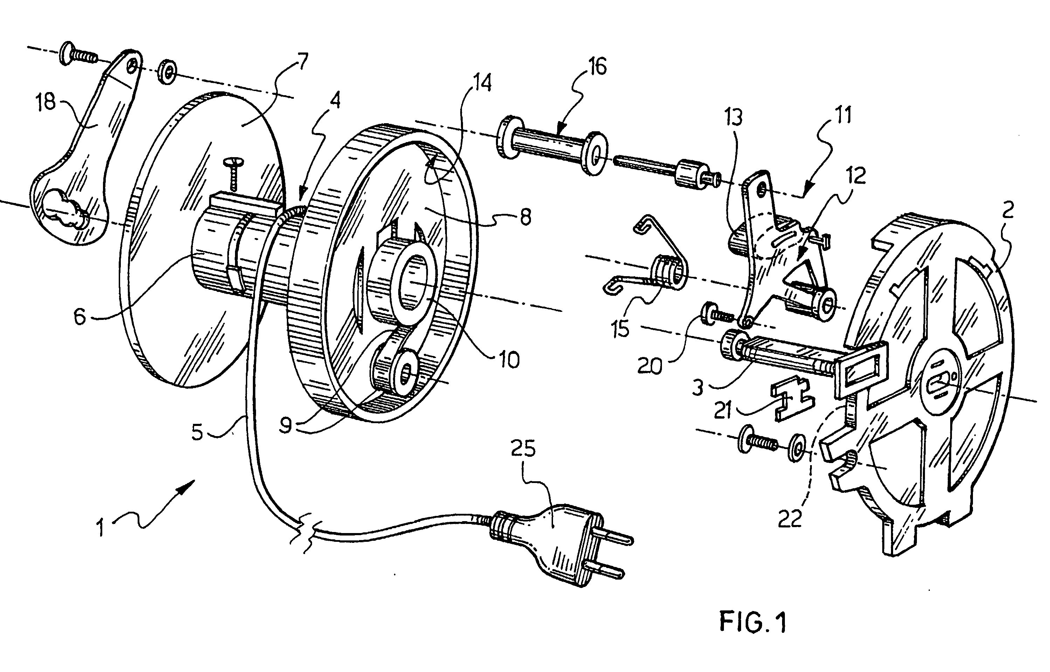

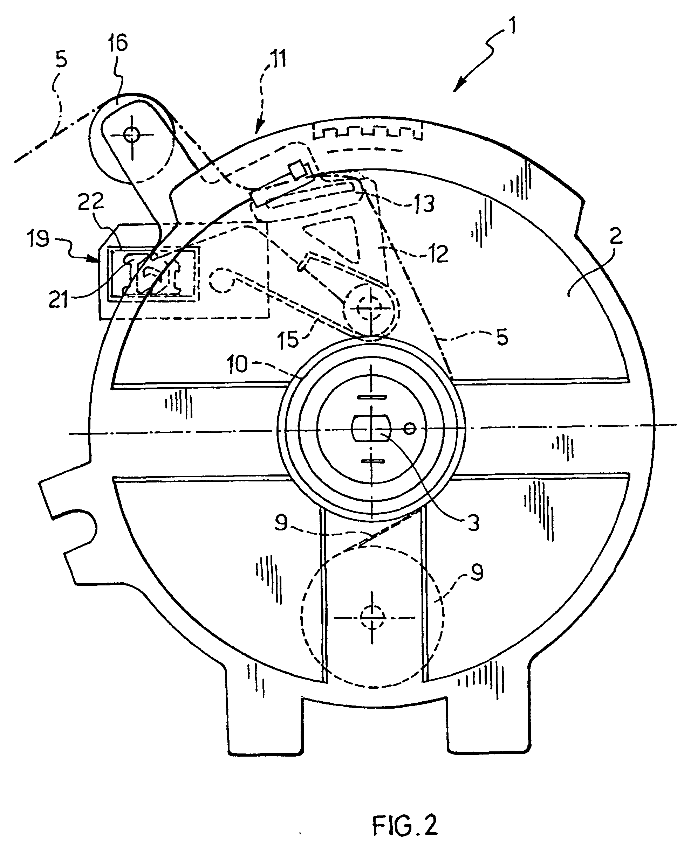

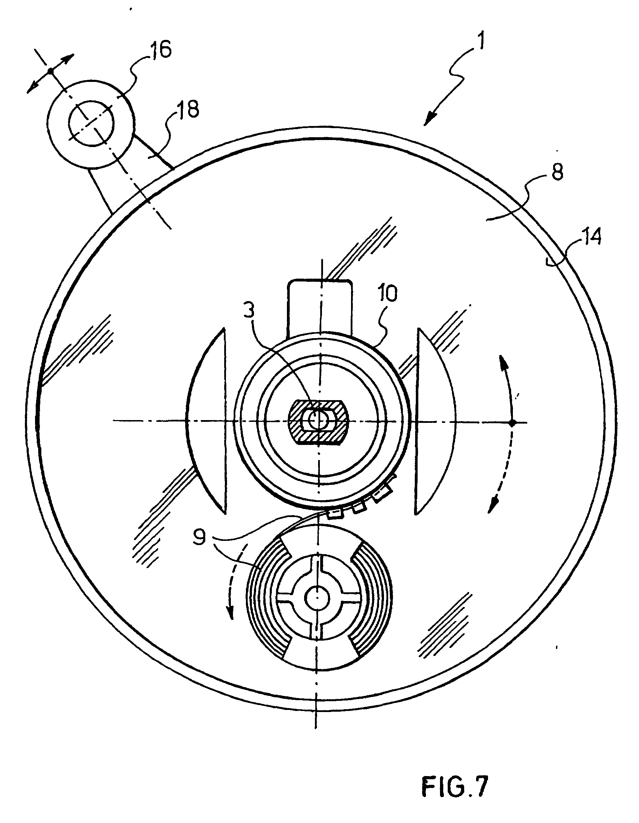

With reference to Figures 1 to 7, a cable-winding device according to the invention, to be housed inside the casing of a household appliance (not shown in the drawings), for example, a vacuum cleaner, is generally indicated 1.

The cable-winding device 1 comprises a fixed support 2 for fixing the cable-winding device to the appliance. In the embodiment shown, the fixed support 2 takes the form of a disk having a plurality of fixing flanges. Advantageously, the fixed support 2 may be produced by moulding of plastics material and has reinforcing ribs.

A hollow cylindrical body 3 extends perpendicularly from the centre of the fixed support 2 and acts as a pin or axle for supporting a reel 4 for holding an electrical cable 5.

The pin 3 is advantageously left free or open along a cylindrical arc to enable electrical connections to extend into it from outside.

The reel 4 is supported rotatably by the pin 3 and comprises a cylindrical hub 6 having, at its ends, two opposed flat circular flanges indicated 7 and 8, respectively.

The hub 6 has known means for anchoring an end of the electrical cable 5 to the reel 4. Moreover, the reel 4 has sliding electrical contacts (not shown in the drawing) which cooperate with fixed electrical contacts carried by the pin 3 in order to establish electrical continuity with respective terminals of the fixed support 2. The sliding electrical contacts of the reel 4 are electrically connected to the conductors of the electrical cable 5.

The cable-winding device 1 comprises resilient means connected to the reel 4 and to the fixed support 2 for resiliently biasing the reel 4 towards an initial position in which the whole of the electrical cable 5 is wound on the reel 4, as will become clearer from the following description. In the embodiment shown, these resilient means take the form of a spiral spring 9 having its ends connected to the fixed support 2 and to a cylindrical ring 10 fixed to the flange 8 of the reel 4, respectively. During the necessary rotation of the reel 4 to unwind a portion of electrical cable 5, the spiral spring 9 is consequently wound around the ring 10 so as to be resiliently loaded, in wholly conventional manner.

The fixed support 2 and the reel 4 of the cable-winding device 1 are preferably of the type described in European patent EP 0 861 628.

The cable-winding device 1 further comprises stop means 11 for locking the reel 4 in an operative position in which a predetermined portion of the electrical cable is unwound from the reel against the action exerted by the spiral spring 9.

The stop means 11 are lockable/releasable. Basically, the stop means can be locked to prevent rotation of the reel 4 after a portion of electrical cable 5 of the required length has been unwound therefrom. The stop means 11 can then be released to allow the electrical cable 5 to be rewound automatically by means of the spiral spring 9.

An operative connection is provided between the electrical cable 5 and the stop means 11 so that the locking/release of the stop means 11 can be brought about by imparting variations in pull and/or inclination to the portion of electrical cable 5 unwound from the reel 4.

With particular reference to Figures 1 to 7, the stop means 11 comprise a rocker 12 mounted on the fixed support 2 so as to be pivotable relative thereto. A shoe 13 fixed firmly to the rocker 12 can contact the reel 4 so as to prevent it from rotating. In the embodiment shown, the shoe 13 takes the form of a brake pad covered with a layer of rubber or other equivalent friction material.

When the cable-winding device 1 is assembled, the rocker 12 is positioned so as to be enclosed within a circular outer rim 14 of the flange 8. Moreover, a helical spring 15 acting on the rocker 12 keeps the shoe 13 pressed against the rim 14 of the flange 8. For this purpose, the shoe 13 has a curved profile complementary with that of the circular rim 14.

The rocker 12 is mounted pivotably on the fixed support 2 in a manner such that its centre of pivoting is offset relative to the cylindrical pin 3 so that the rocker is eccentric relative to the reel 4. This increases the locking effect exerted on the reel 4.

A cable-guide roller 16 is mounted rotatably on one end of the rocker 12 in order to support and guide the electrical cable 5 leaving or entering the cable-winding device 1, that is, the electrical cable 5 which has just been unwound from the reel 4, or which is about to be rewound thereon, respectively.

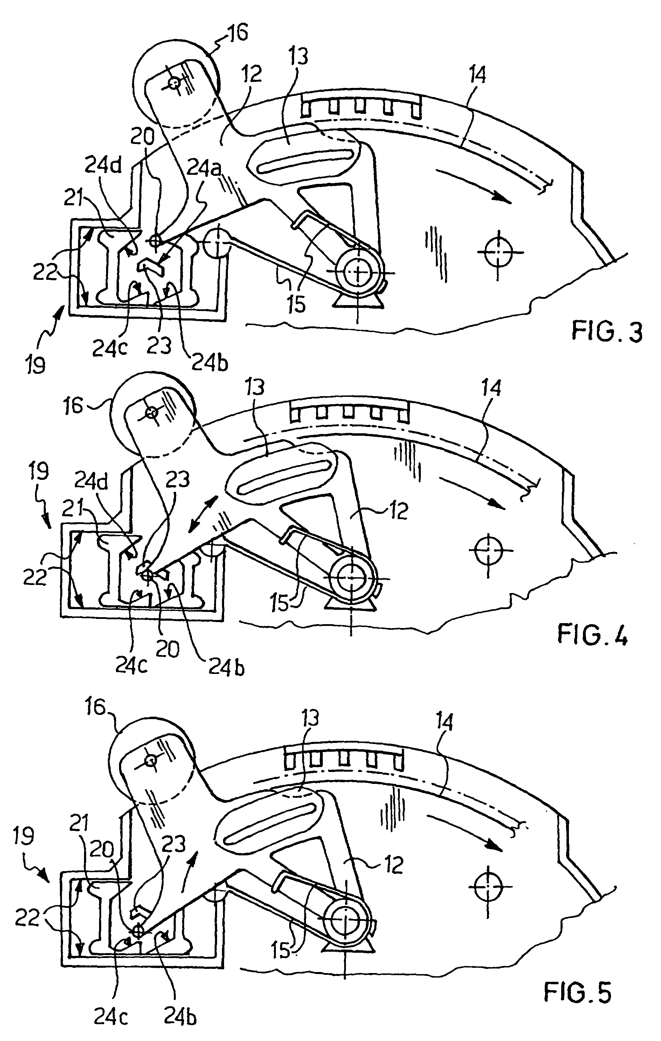

As stated above, the action exerted by the helical spring 15 keeps the rocker 12 in a stop position (Figure 3) in which the shoe 13 is kept pressed against the reel 14 in order to prevent the reel 4 from rotating. By acting on the rocker 12 with sufficient force to overcome the resilient resistance of the helical spring 15, it is possible to pivot the rocker 12 (anticlockwise with reference to Figure 3) until it is brought to a released position (Figure 4) in which the shoe 13 is not in engagement with the reel 4.

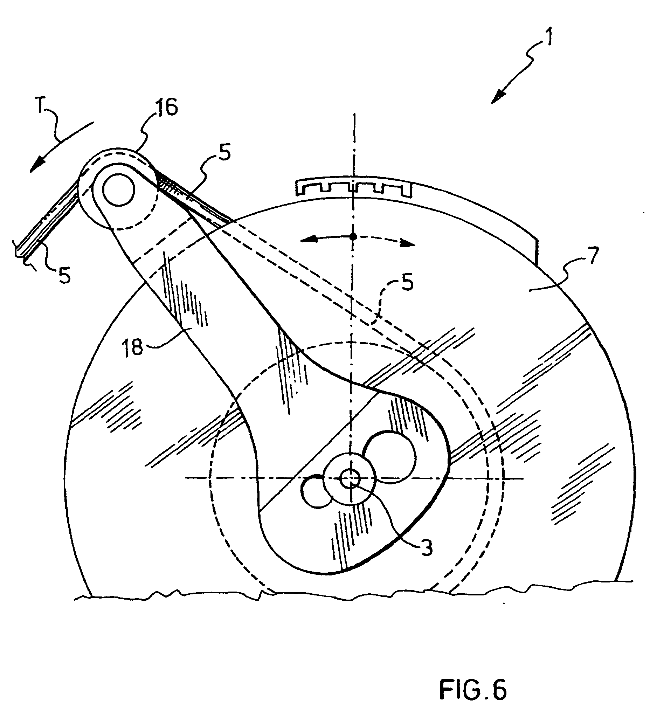

The above-mentioned pivoting to bring the rocker from the stop position to the release position can advantageously be brought about by acting on the cable-guide roller 16 by means of the portion of electrical cable 5 unwound from the reel 4, that is, by pulling the electrical cable 5 and inclining it in the direction indicated by the arrow T of Figure 6.

The cable-guide roller 16 is preferably supported at one end by the rocker 12 and at the other end by a support lever 18 which in turn is mounted for pivoting on the pin 3 or another pin fixed to the fixed support 2. A cantilever-like support of the cable-guide roller 16 by the rocker 12 is thus avoided and the pressure exerted by the electrical cable 5 on the cable-guide roller 16 is kept parallel and constant even when the angular position adopted by the rocker 12 changes.

The stop means 11 also comprise a releasable snap-engagement device 19 for restraining the rocker 12 when it has pivoted to the release position (Figure 4) against the resilient biasing action exerted by the helical spring 15 towards the stop position (Figure 3).

The snap engagement and the subsequent release of the rocker 12 from the releasable snap-engagement device 19 are advantageously brought about by acting on the cable-guide roller 16 by means of the electrical cable 5 so as to impart pivoting movements to the rocker 12. For this purpose, the rocker 12 has an appendage 20 which can snap-engage with the releasable snap-engagement device 19 as a result of a pivoting of the rocker 12 from the stop position (Figure 3) to an advanced position beyond the release position (Figure 4). In order to release the appendage 20 from the releasable snap-engagement device 19, it suffices to pivot the rocker 12 from the release position (Figure 4) towards a more advanced position (Figure 5), against the biasing action exerted thereon by the helical spring 15 and then to release the rocker 12.

In the embodiment shown, the appendage 20 of the rocker is formed by a pawl projecting transversely from the rocker 12.

The releasable snap-engagement device 19 takes the form of a slide 21 slidable, between two straight guides 22, away from and towards the centre of pivoting of the rocker 12. The slide 21 has a central abutment 23 forming a downwardly-facing cusp which the appendage 20 abuts from below as a result of the upward biasing action exerted by the helical spring 15, holding the rocker 12 in the release position (Figure 4). The slide 21 also has four inclined surfaces (indicated 24a, 24b, 24c, 24d, respectively) which define ramps or slides on which the appendage 20 acts in order to bring about the movement of the slide 21.

A first inclined surface 24a is formed on the upper surface of the central abutment 23 and is inclined in a manner such as to move the slide 21 away from the centre of pivoting of the rocker 12 when the appendage 20 travels along it. In particular, the appendage 20 travels along the inclined surface 24a during a pivoting of the rocker 12 from the stop position (Figure 3) towards an advanced position. Before the rocker 12 reaches the advanced position, the appendage 20 slides from the inclined surface 24a to an underlying inclined surface 24b which faces upwards and is inclined in a manner such as to move the slide 21 towards the centre of pivoting of the rocker 12 when the appendage 20 travels along it. Since the cusp formed by the central abutment 23 is positioned above the end portion of the inclined surface 24b, upon completion of this latter translational movement, the appendage 20 is positioned beneath the cusp formed by the central abutment 23. When the rocker 12 is released, the appendage 20 consequently comes into abutment with the cusp, locking the rocker 12 in the release position (Figure 4), as explained above.

The appendage 20 is released from the cusp of the central abutment 23 simply by causing the rocker 12 to pivot towards an advanced position. The appendage 20 thus travels along a third inclined surface 24c which faces upwards, is positioned beside the inclined surface 24b, and is inclined in the same manner. Whilst the appendage 20 travels along the inclined surface 24c, the slide is forced to move towards the centre of pivoting of the rocker 12. The central abutment 23 consequently moves out of vertical alignment with the appendage 20 and releases the rocker 12 which is returned to the stop position (Figure 3) as a result of the action exerted thereon by the helical spring 15. During the return to the stop position, the appendage 20 travels along a fourth inclined surface 24d which faces downwards and is inclined in a manner such as to move the slide 21 away from the centre of pivoting of the rocker 12 when the appendage 20 travels along it. Basically, the inclined surface 24d returns the slide 21 to the initial, intermediate position.

When the rocker is in the release position (Figure 4), the reel 4 is free to rotate and the action exerted on the reel 4 by the spiral spring 9 returns the reel 4 to the initial position in which the electrical cable 5 is fully wound onto the reel. In this condition, the limit of the rotation of the reel 4 is defined by the electrical plug 25 which is connected to the free end of the electrical cable 5. In fact, if the electrical cable 5 continues to be rewound, the electrical plug 25 stops against the edge of the hole through which the electrical cable 5 emerges from the household appliance.

When the rocker is locked in the release position (Figure 4), the cable-winding device 1 permits automatic regulation of the pulling-out and the recovery of the electrical cable 5 extracted from the reel 4, that is, regulation of the length of the cable.

Since the locking/release of the stop means 11 are. achieved by pulling and inclining the electrical cable 5 unwound from the reel 4 as indicated above, that is, purely by acting on the electrical cable 5, the cable-winding device 1 can advantageously be housed inside the casing of the household appliance, since it suffices to provide a hole in the casing through which the electrical cable 5 can extend. It is clear from the foregoing that the cable-winding device 1 enables the presence of a button or a knob and any lever connection for locking and releasing the rotation of the reel 4 to be eliminated.

When the cable-winding device 1 is housed inside the casing of the household appliance in a manner such that the cable-guide roller 16 projects and is accessible from outside, the user can also advantageously lock/release the stop means 11 by acting on the rocker 12 or, more precisely, on the cable-guide roller 16, with his or her foot. In other words, the cable-winding device 1 can be operated by the user without the need for the user to bend down, providing a so-called "*back-saving*" system.

The cable-winding device according to the invention is controlled by acting directly on the electrical cable and therefore enables the presence of any button or foot-operated device to be eliminated. It consequently suffices to provide for the presence of a hole in the casing of the household appliance in which the cable-winding device is housed, through which the electrical cable can extend.

A further advantage of the cable-winding device according to the invention lies in the fact that it is structurally and functionally simple and is thus inexpensive to produce and ensures reliable operation in the long term.

Naturally, in order to satisfy specific and contingent requirements, an expert in the art may apply to the above-described cable-winding device many modifications and variations all of which, however, are included in the scope of protection of the invention as defined by the following claims.

## Claims

1. A cable-winding device of the type comprising:
- a fixed support (2),
- a reel (4) for holding an electrical cable (5), the reel (4) being mounted so as to be rotatable on a pin (3) of the fixed support (2),
means for anchoring an end of the electrical cable (5) to the reel (4),
- at least one pair of sliding electrical contacts associated with the reel (4) and cooperating with fixed electrical contacts of the fixed support (2) in order to establish electrical continuity,
- first resilient means (9) connected to the reel (4) and to the fixed support (2) for resiliently biasing the reel (4) towards an initial position in which the electrical cable (5) is wound on the reel (4), and
- stop means (11) for locking the reel (4) in an operative position in which the electrical cable (5) is unwound from the reel (4) against the action exerted by the first resilient means (9), the stop means (11) being lockable/releasable, wherein an operative coupling is provided between the electrical cable (5) and the stop means (11) for enabling the stoop means to be locked/released by variations in the pull and/or in the inclination imparted to the electrical cable (5) unwound from the reel (4), **characterized in that** the stop means (11) comprise a rocker (12) mounted for pivoting on the fixed support (2) and having a shoe (13) formed as a brake pad which can contact the reel (4) so as to prevent it from rotating.

2. A device according to Claim 1, wherein the shoe (13) formed as a brake pad is covered with a layer of friction material.

3. A device according to Claim 1 or 2, in which the stop means (11) further comprise:
- second resilient means (15) acting on the rocker (12) in order to keep the rocker (12) resiliently in a stop position in which the shoe (13) is pressed against the reel (4) so as to prevent the reel (4) from rotating,
- a cable-guide roller (16) mounted rotatably on the rocker (12) for supporting the electrical cable (5) emerging from the reel (4),
- a releasable snap-engagement device (19) which can restrain the rocker (12) when the rocker (12) is pivoted to a release position in which the shoe (13) is not bearing against the reel (4), the pivoting movements imparted to the rocker (12) by the action of the electrical cable (5) on the cable-guide (16) bringing about the snap-engagement and the subsequent release of the rocker (12) from the releasable snap-engagement device (19).

4. A device according to Claim 3, in which the rocker (12) comprises an appendage (20) for snap-engaging in the releasable snap-engagement device (19) as a result of a pivoting of the rocker (12) from the stop position to an advanced position beyond the release position, the appendage (20) being releasable from the releasable snap-engagement device (19) by pivoting of the rocker (12) from the release position to the advanced position.

5. A device according to any one of the preceding claims, wherein the rocker (12) is arranged so as to be enclosed within a circular outer rim (14) of a flange (8) of the reel (4) and the shoe (13) can be pressed against said rim (14) in order to prevent the reel (4) from rotating.

6. A device according to claim 5, wherein the shoe (13) has a curved profile complementary with that of the circular rim (14).

7. A device according to any one of the preceding claims, wherein the rocker (12) is pivotably mounted on the fixed support (2) eccentric relative to the reel (4).

## Patentansprüche

1. Kabelaufwickelvorrichtung des Typs, der umfasst:
- einen stationären Träger (2),
- eine Rolle (4), die ein elektrisches Kabel (5) aufnimmt, wobei die Rolle (4) so angebracht ist, dass sie auf einem Bolzen (3) des stationären Trägers (2) gedreht werden kann,
- eine Einrichtung zum Verankern eines Endes des elektrischen Kabels (5) an der Rolle;
- wenigstens ein Paar gleitender elektrischer Kontakte, die zu der Rolle (4) gehören und mit stationären elektrischen Kontakten des stationären Trägers (2) zusammenwirken, um elektrischen Durchgang herzustellen,
- eine erste federnde Einrichtung (9), die mit der Rolle und dem stationären Träger (2) verbunden ist, um die Rolle federnd auf eine Ausgangsposition zuzuspannen, in der das elektrische Kabel (5) auf die Rolle (4) gewickelt ist, und
- eine Anschlageinrichtung (11), die die Rolle (4) in einer Funktionsposition arretiert, in der das elektrische Kabel (5) gegen die durch die erste federnde Einrichtung (9) ausgeübte Wirkung von der Rolle (4) abgewickelt ist, wobei die Anschlageinrichtung (11) arretiert/gelöst werden kann und eine operative Kopplung zwischen dem elektrischen Kabel (5) und der Anschlageinrichtung (11) vorhanden ist, die es ermöglicht, die Anschlageinrichtung durch Veränderung des Zugs und/oder der Neigung, die auf das von der Rolle (4) abgewickelte elektrische Kabel (5) wirken/wirkt, zu arretieren/lösen, **dadurch gekennzeichnet, dass** die Anschlageinrichtung (11) einen Schwinghebel (12) umfasst, der an dem stationären Träger (2) schwenkbar angebracht ist und einen Backen (13) hat, der als ein Bremsbelag ausgebildet ist, der mit der Rolle (4) in Kontakt kommen kann, zu verhindern, dass sie sich dreht.

2. Vorrichtung nach Anspruch 1, wobei der Backen (13), der als Bremsbelag ausgebildet ist, mit einer Schicht aus Reibmaterial überzogen ist.

3. Vorrichtung nach Anspruch 1 oder 2, wobei die Anschlageinrichtung (11) des Weiteren umfasst:
- eine zweite federnde Einrichtung (15), die auf den Schwinghebel (12) wirkt, um den Schwinghebel (12) federnd in einer Anschlagposition zu halten, in der der Backen (13) an die Rolle (4) gedrückt wird, um zu verhindern, dass sich die Rolle (4) dreht,
- eine Kabelführungsrolle (16), die drehbar an dem Schwinghebel (12) angebracht ist, um das elektrische Kabel (5) zu tragen, das von der Rolle (4) austritt,
- eine lösbare Einschnappeingriffvorrichtung (19), die den Schwinghebel (12) zurückhalten kann, wenn der Schwinghebel (12) an eine Löseposition geschwenkt wird, in der der Backen (13) nicht an der Rolle (4) anliegt, wobei die Schwenkbewegungen, in die der Schwinghebel (12) durch die Wirkung des elektrischen Kabels (5) auf die Kabelführung (16) versetzt wird, den Einschnappeingriff und das anschließende Lösen des Schwinghebels (12) von der lösbaren Einschnappvorrichtung (19) bewirken.

4. Vorrichtung nach Anspruch 3, wobei der Schwinghebel (12) einen Ansatz (20) umfasst, der aufgrund eines Schwenkens des Schwinghebels (12) aus der Anschlagposition an eine vorgeschobene Position jenseits der Löseposition in der lösbaren Einschnappvorrichtung (19) einschnappend eingreift, und der Ansatz (20) durch Schwenken des Schwinghebels (12) aus der Löseposition an die vorgeschobene Position aus der lösbaren Einschnappvorrichtung (19) gelöst werden kann.

5. Vorrichtung nach einem der vorangehenden Ansprüche, wobei der Schwinghebel (12) so angeordnet ist, dass er in einem kreisförmigen äußeren Rand (14) eines Flansches (8) der Rolle (4) eingeschlossen ist, und der Backen (13) an den Rand (14) gedrückt werden kann, um die Rolle (4) an Drehung zu hindern.

6. Vorrichtung nach Anspruch 5, wobei der Backen (13) ein gekrümmtes Profil hat, das komplementär zu dem des kreisförmigen Randes (14) ist.

7. Vorrichtung nach einem der vorangehenden Ansprüche, wobei der Schwinghebel (12) exzentrisch in Bezug auf die Rolle (4) schwenkbar an dem stationären Träger (2) angebracht ist.

## Revendications

1. Dispositif d'enroulement de câble du type comportant :
- un support fixe (2),
- une bobine (4) destinée à porter un câble électrique (5), la bobine (4) étant montée de façon à pouvoir tourner sur une broche (3) du support fixe (2),
- un moyen pour accrocher une extrémité du câble électrique (5) à la bobine (4),
- au moins une paire de contacts électriques coulissants associés à la bobine (4) et coopérant avec des contacts électriques fixes du support fixe (2) afin d'établir la continuité électrique,
- un premier moyen élastique (9) relié à la bobine (4) et au support fixe (2) pour rappeler élastiquement la bobine (4) vers une position initiale dans laquelle le câble électrique (5) est enroulé sur la bobine (4), et
- un moyen d'arrêt (11) destiné à bloquer la bobine (4) dans une position de travail dans laquelle le câble électrique (5) est déroulé de la bobine (4) contre l'action exercée par le premier moyen élastique (9), le moyen d'arrêt (11) pouvant être verrouillé/libéré, dans lequel un accouplement actif est prévu entre le câble électrique (5) et le moyen d'arrêt (11) pour permettre au moyen d'arrêt d'être verrouillé/libéré par des variations de la traction et/ou de l'inclinaison appliquées au câble électrique (5) déroulé de la bobine (4), **caractérisé en ce que** le moyen d'arrêt (11) comporte un levier oscillant (12) monté de façon à pivoter sur le support fixe (2) et ayant une semelle (13) réalisée sous la forme d'un patin de frein qui peut entrer en contact avec la bobine (4) afin de l'empêcher de tourner.

2. Dispositif selon la revendication 1, dans lequel la semelle (13) réalisée sous la forme d'un patin de frein est recouverte d'une couche de matière de frottement.

3. Dispositif selon la revendication 1 ou 2, dans lequel le moyen d'arrêt (11) comporte en outre :
- un second moyen élastique (15) agissant sur le levier oscillant (12) afin de maintenir élastiquement le levier oscillant (12) dans une position d'arrêt dans laquelle la semelle (13) est appliquée sous pression contre la bobine (4) afin d'empêcher la bobine (4) de tourner,
- un rouleau (16) de guidage de câble monté de façon à pouvoir tourner sur le levier oscillant (12) afin de supporter le câble électrique (5) sortant de la bobine (4),
- un dispositif libérable (19) d'enclenchement par encliquetage qui peut retenir le levier oscillant (12) lorsque 'le levier oscillant (12) pivote dans une position de libération dans laquelle la semelle (13) ne porte pas contre la bobine (4), les mouvements de pivotement communiqués au levier oscillant (12) par l'action du câble électrique (5) sur le guide-câble (16) provoquant l'enclenchement par encliquetage et ensuite la libération du levier oscillant (12) du dispositif d'enclenchement par encliquetage libérable (19).

4. Dispositif selon la revendication 3, dans lequel le levier oscillant (12) comporte un accessoire (20) destiné à s'enclencher par encliquetage dans le dispositif d'enclenchement par encliquetage libérable (19) par suite d'un pivotement du levier oscillant (12) de la position d'arrêt à une position avancée au-delà de la position de libération, l'accessoire (20) pouvant être libéré du dispositif d'enclenchement par encliquetage libérable (19) par un pivotement du levier oscillant (12) de la position de libération vers la position avancée.

5. Dispositif selon l'une quelconque des revendications précédentes, dans lequel le levier oscillant (12) est agencé de façon à être enfermé à l'intérieur d'une jante extérieure circulaire (14) d'une joue (8) de la bobine (4) et la semelle (13) peut être appliquée sous pression contre ladite jante (14) afin d'empêcher la bobine (4) de tourner.

6. Dispositif selon la revendication 5, dans lequel la semelle (13) présente un profil courbé complémentaire de celui de la jante circulaire (14).

7. Dispositif selon l'une quelconque des revendications précédentes, dans lequel le levier oscillant (12) est monté de façon à pouvoir pivoter sur le support fixe (2) excentriquement par rapport à la bobine (4).
